# FASCICULE DE BREVET EUROPEEN

(11) **EP 0 382 606 B1**
(45) Date de publication et mention de la délivrance du brevet: **07.04.1993**
(21) Numéro de dépôt: 90400279.7
(22) Date de dépôt: 02.02.1990
(51) Int. Cl.: H02G 3/06, F16L 25/00

(54) **Bague de fermeture de gaines annelées**
Verschlussring für gewellte Rohre
Closing ring for corrugated conduits

(30) Priorité: 08.02.1989 FR 8901607
(43) Date de publication de la demande: 16.08.1990
(73) Titulaire: Société anonyme dite: LABINAL, 78190 Montigny le Bretonneux (FR)
(72) Inventeur: Nadin, Léonard, F-31240 l'Union (FR)
(74) Mandataire: Faber, Jean-Paul

(56) Documents cités:
- CH-A- 589 954
- US-A- 3 711 633
- US-A- 4 443 031

## Description

La présente invention se rapporte aux bagues de fermeture de gaines annelées.

Pour protéger les conducteurs électriques, on utilise des gaines en matière plastique qui sont annelées et qui présentent une fente longitudinale. De telles gaines sont très pratiques car elles évitent d'avoir à placer les conducteurs en les engageant par une extrémité de la gaine et en les faisant coulisser dans cette dernière. De plus, elles permettent de recevoir des conducteurs qui sont solidaires à leurs extrémités d'éléments qui ne passeraient pas à travers la gaine, par exemple, des boîtiers de connexions électriques.

Pour éviter que les gaines s'ouvrent le long de leur fente si elles sont courbées ou déformées, on fixe de place en place des bagues en matière plastique qui comprennent une première partie en arc de cercle pourvue à une extrémité d'un organe de verrouillage et à l'autre extrémité une charnière sur laquelle s'articule une seconde partie complémentaire en arc de cercle dont l'extrémité libre est pourvue d'un organe de verrouillage complémentaire de l'organe de la première partie, la surface interne de la bague présentant au moins une nervure destinée à coopérer avec une rainure formée entre les anneaux de la gaine. De telles bagues sont généralement moulées en une seule pièce en matière plastique, la charnière étant constituée par une simple bande de matière plastique reliant les deux parties en arc de cercle.

Un inconvénient de telles bagues est que la bande qui constitue la charnière et qui est obligatoirement d'une petite épaisseur et d'une résistance mécanique faible souvent se brise, de sorte que la bague ne reste plus fixée à la gaine.

On a imaginé de prévoir des moyens pour verrouiller les côtés attenant à la charnière lorsque la bague est fermée, mais ces moyens se sont avérés complexes et peu pratiques à mouler.

La technique antérieure connaît également (voir brevet US 4 443 031) une bague en une seule pièce de matière plastique moulée avec deux parties complémentaires déterminant entre elles un corps cylindrique et reliée par une bande formant charnière, l'une des parties comportant du côté du bord libre une première barrette avec un crochet tourné vers l'intérieur et la seconde partie comportant sur son bord attenant à la charnière une seconde barrette avec un crochet tourné dans le même sens que celui du premier crochet, des ouvertures étant prévues dans chacune des parties pour recevoir les crochets correspondants.

Une telle disposition présente divers inconvénients. La charnière est obligatoirement large afin que le second crochet puisse s'insérer dans l'ouverture correspondante de la première partie, de sorte que lorsque la bague est fermée, la charnière forme un bourrelet qui ne permet pas de l'utiliser dans des emplacements particulièrement étroits ou exigüs.

De plus, la surface intérieure de la bague comporte des nervures pour coopérer avec les rainures de la gaine et si on exerce une certaine traction sur la gaine on tend à dégager les ergots des ouvertures.

L'un des buts de la présente invention est de remédier à ces inconvénients.

La bague, selon l'invention, est du type comprenant deux parties complémentaires déterminant entre elles un corps cylindrique, la première partie et la deuxième partie étant réalisées en une seule pièce moulée avec une bande reliant lesdites parties pour constituer une charnière, chaque partie comportant au moins une nervure disposée dans un plan perpendiculaire à l'axe longitudinal, le bord libre de la première partie opposé à celui adjacent à la charnière comportant un premier organe de verrouillage complémentaire d'un premier organe de verrouillage prévu sur le bord libre correspondant de la seconde partie, tandis que le bord de la première partie, adjacent à la charnière, comporte un second organe de verrouillage complémentaire d'un second organe de verrouillage prévu sur le bord de la seconde partie, adjacent à ladite charnière, et est caractérisée en ce que le premier organe de verrouillage de la première partie prévu sur son bord libre comprend une barrette terminée par un crochet tourné vers l'extérieur et le second organe de verrouillage de ladite première partie est formé par une barrette terminée par un crochet tourné vers l'extérieur, tandis que la seconde partie comporte deux ouvertures pratiquées dans l'épaisseur des bords correspondants et destinées à recevoir les barrettes correspondantes et dont les bords extérieurs sont méplats pour coopérer avec les crochets correspondants.

Une telle disposition est très avantageuse car elle est simple à réaliser et ne demande pas la fabrication d'un moule complexe et, de plus elle permet de fixer l'une sur l'autre deux bagues, l'une étant tournée sens dessus-dessous pour permettre, par exemple, de maintenir côte à côte deux gaines annelées.

Enfin, comme les ouvertures sont pratiquées dans l'épaisseur de la seconde partie, on obtient une bague compacte, sans surépaiseur sur sa surface latérale.

Suivant une variante de réalisation, l'une des parties est pourvue sur sa surface externe d'un téton pourvu de moyens pour sa fixation dans un trou d'une paroi.

On peut, ainsi, facilement fixer contre une paroi une gaine ou éventuellement deux gaines côte à côte.

Le diamètre interne de l'une des extrémités de la bague peut être supérieur au diamètre interne de l'autre extrémité ce qui permet d'assembler bout à bout deux gaines ayant des diamètres différents.

Suivant une variante de réalisation l'une des parties comporte des moyens pour sa fixation à un élément mâle.

De préférence, l'une des parties est pourvue d'une glissière avec un téton d'arrêt pour recevoir un élément mâle correspondant.

Suivant encore une autre forme d'exécution de l'invention, l'une des parties est pourvue d'une encoche pour le passage de conducteurs électriques.

Enfin, l'encoche est de préférence pratiquée sur le bord libre de l'une des parties ce qui facilite la mise en place des conducteurs dans l'encoche.

L'invention va maintenant être décrite avec plus de détails en se référant à des modes de réalisation particuliers donnés à titre d'exemple seulement et représentés aux dessins annexés, dans lesquels :

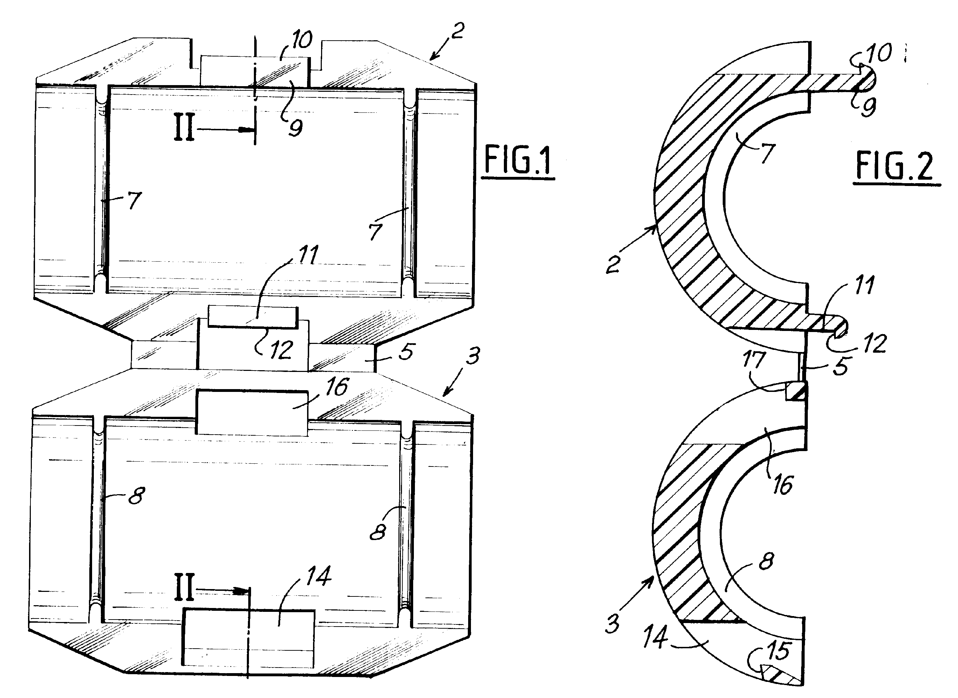

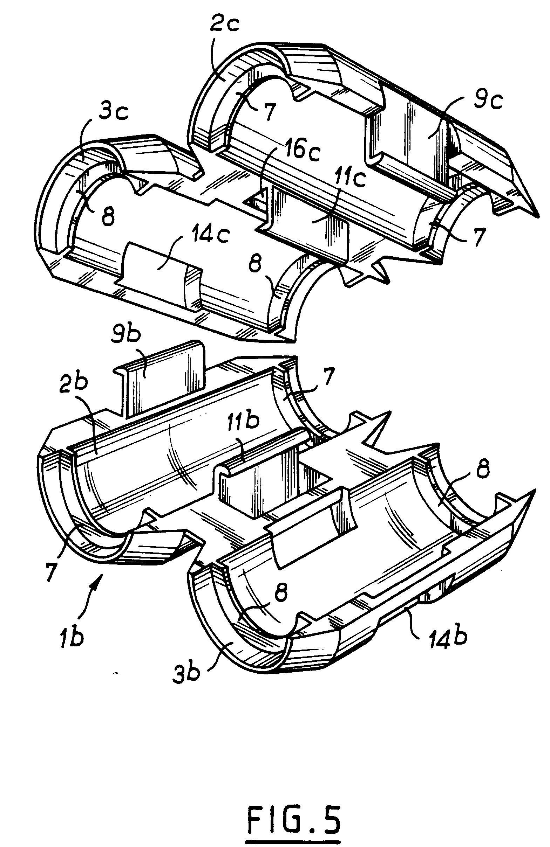

Figure 1 est une vue en plan d'une bague, selon l'invention.

Figure 2 est une vue en coupe suivant la ligne II-II de la figure 1.

Figure 3 est une vue en élévation d'une bague montée.

Figure 4 est une vue en élévation d'une variante de la bague, selon l'invention.

Figure 5 est une vue en perspective montrant l'utilisation de deux bagues dont l'une est tournée sens dessus-dessous.

Figure 6 est une vue en coupe montrant le montage de deux bagues l'une sur l'autre.

Figure 7 montre en élévation avec un arrachement une variante de réalisation de la bague, selon l'invention.

Figure 8 montre en élévation encore une autre forme d'exécution de la bague, selon l'invention.

Figure 9 est une vue en perspective d'encore une autre forme de réalisation.

Aux différentes figures, on a représenté une bague désignée, dans son ensemble par la référence 1 et constituée de deux parties 2 et 3.

Les parties 2 et 3 sont réalisées en matière plastique et moulées d'une seule pièce avec une bande 5 peu épaisse constituant une charnière.

Chaque partie 2 et 3 affecte la forme d'un arc de cercle de 180°.

La partie 2 comporte sur sa surface interne deux nervures 7 situées dans des plans parallèles et perpendiculaire à l'axe longitudinal, la partie 3 comportant des nervures 8 correspondantes.

La partie 2, dans la partie centrale de son extrémité opposée à celle attenante à la charnière 5 comporte une barrette 9 terminée par un crochet 10 tourné vers l'extérieur et destinée à coopérer avec une ouverture 14 prévue dans l'extrémité libre correspondante de la partie 3, l'un des bords de ladite ouverture 14 présentant une partie méplate 15 contre laquelle porte le crochet 10. Ainsi, les éléments 9, 10, 14 et 15 constituent des organes de verrouillage des deux parties l'une sur l'autre.

Dans la partie centrale du bord de la partie 2, adjacente à la charnière 5 s'érige une barrette 11, pourvue à son extrémité libre d'un crochet 12 tourné vers l'extérieur, tandis que la partie 3 comporte, sur son bord correspondant une ouverture 16 dont un bord présente un méplat 17.

Lorsqu'on ferme la bague 1, la barrette 9 et le crochet 10 en coopérant respectivement avec l'ouverture 14 et le méplat 15 assurent le verrouillage des extrémités des parties 2 et 3 opposées à celles adjacentes à la charnière 5, tandis que les extrémités desdites parties 2 et 3 voisines de la charnière 5 sont également verrouillées par la barrette 11 et son crochet 12 qui coopèrent respectivement avec l'ouverture 16 et le méplat 17.

La bague, selon l'invention, est destinée à être utilisée avec des gaines 20 présentant une fente longitudinale 21.

De telles gaines présentent une série d'anneaux séparés par des gorges 22.

Les nervures 7 et les nervures 8 correspondantes sont séparées par un intervalle qui correspond au pas entre les gorges 22 et lorsque la bague est montée sur la gaine, lesdites nervures s'insèrent dans les gorges correspondantes 22.

La bague 1 peut être utilisée placée au voisinage des extrémités d'une gaine pour éviter que celle-ci s'ouvre le long de sa fente 21 intempestivement.

On peut également utiliser la bague, selon l'invention, pour l'assemblage bout à bout de deux gaines 20.

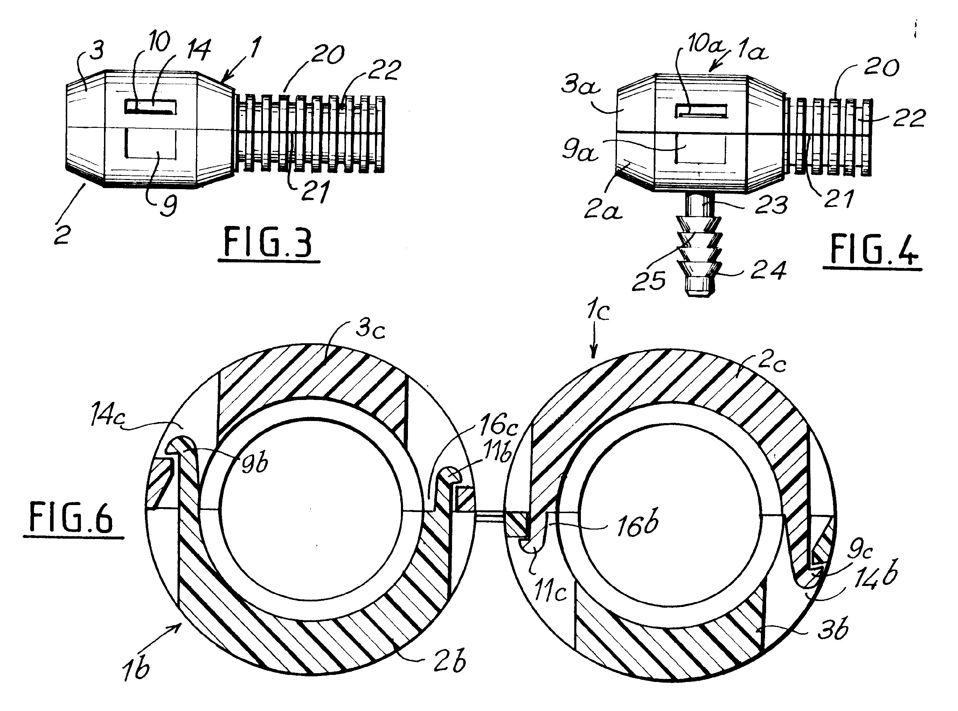

A la figure 4, on a représenté une variante de l'invention. Sur cette figure, on a porté les mêmes références que celles utilisées pour les figures précédentes pour désigner les éléments correspondants, toutefois ces références sont affectées de la lettre "a".

Dans cette variante de réalisation, la bague 1a est destinée, d'une part, à éviter l'ouverture intempestive de la gaine 20 et, d'autre part, à permettre de maintenir la gaine contre une paroi. A cet effet, la partie 2a comporte un téton 23 terminé par une pointe 24 et pourvu d'une série d'épaulements 25.

Le téton 23 est destiné à s'engager dans un trou d'une tôle, par exemple, moyennant une déformation élastique des épaulements 25 qui constituent des organes d'arrêt qui évitent que la bague 1a puisse intempestivement se détacher du trou dans lequel elle est fixée par son téton 23.

Une telle bague permet également de fixer bout à bout deux gaines 20.

La bague, selon l'invention, présente l'avantage supplémentaire de pouvoir être fixée avec une seconde bague identique pour pouvoir ainsi, d'une part, empêcher l'ouverture intempestive de la fente 21 de deux gaines 20 et, d'autre part, maintenir ces deux dernières côte à côte. On peut, bien entendu, prévoir que l'une des bagues peut être du type de la gaine 1a (voir figure 4) si des gaines doivent être assujetties à une paroi.

Aux figures 5 et 6, on a représenté le montage de deux bagues l'une sur l'autre. Sur ces figures on a porté pour une bague les références correspondant à celles utilisées pour désigner les mêmes organes mais affectées de la lettre "b", tandis que pour l'autre bague on a affecté les références de la lettre "c".

Comme on le voit aux figures 5 et 6, la bague 1b est maintenue ouverte et la bague 1c est également présentée ouverte mais tournée sens dessus-dessous, de sorte que les deux bagues 1b et 1c peuvent être assemblées (voir figure 6) les barrettes 9c et 11c s'insérant dans les ouvertures 14b et 16b respectivement, tandis que les barrettes 9b et 11b coopèrent avec les ouvertures 14c et 16c, respectivement.

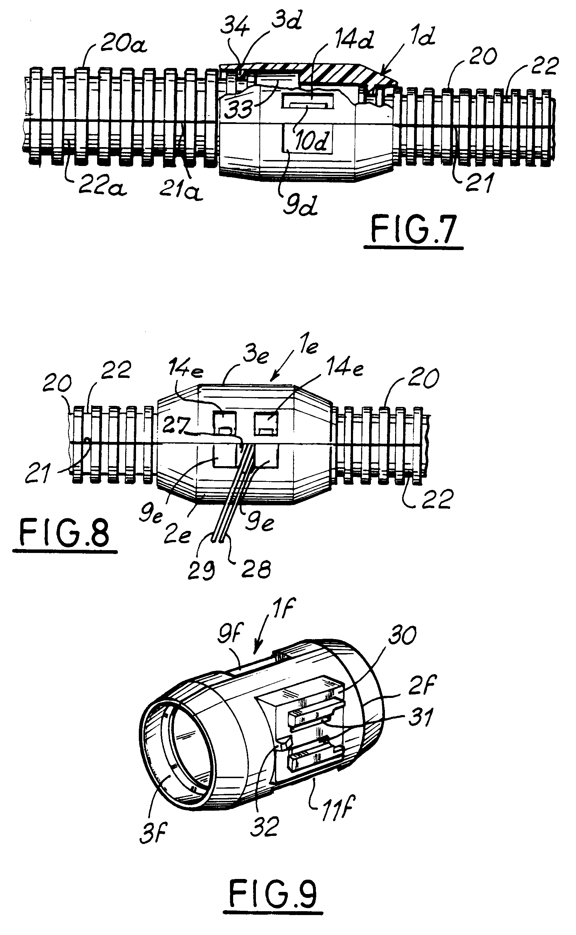

A la figure 7, on a représenté encore une variante de l'invention. Sur cette figure on a porté pour désigner les éléments correspondant à ceux des autres figures les mêmes références, mais affectées de la lettre "d".

La bague de la figure 7 est destinée à permettre d'assembler bout à bout deux gaines 20 et 20a. Ces deux gaines sont annelées, toutefois la gaine 20a a un diamètre supérieur à celui de la gaine 20.

L'une des extrémités de la bague 1d présente un conduit interne 33 qui a un diamètre correspondant à celui de la gaine 20a avec une nervure 34 qui s'insère dans une gorge 22a de la gaine 20a.

Lorsqu'on assemble deux gaines 20 bout à bout avec la bague, selon l'invention, on peut avoir besoin de sorties latérales de fils électriques. La figure 8 montre une forme d'exécution permettant une telle sortie. Sur cette figure, les références désignant les éléments correspondant à ceux des autres figures sont portés avec la lettre "e".

La partie 2e de la bague 1e comporte, deux barrettes 9e et sur son bord, entre ces deux barrettes 9e une encoche 27 qui permet le passage, lorsque la bague est fermée, de conducteurs 28 et 29, par exemple. Bien entendu, la partie 3e est pourvue de deux ouvertures 14e pour recevoir les barrettes 9e.

A la figure 4, on a représenté un moyen de fixation de la bague, selon l'invention, à une paroi. La figure 9 montre une variante des moyens de fixation.

Sur cette figure, on a reporté les références correspondantes des autres figures pour désigner les éléments correspondants, mais affectées de la lettre "f".

La partie 2f comporte venue de moulage une partie méplate 30 avec deux ailettes en saillie 31 qui constituent une glissière pour un élément mâle correspondant prévu sur une paroi.

La partie méplate 30 est pourvue d'un téton 32 qui constitue une butée d'arrêt pour l'élément mâle, ce téton pouvant s'insérer dans un trou de l'élément mâle pour assurer une liaison définitive.

## Revendications

1. Bague de fermeture de gaines annelées (20) du type comprenant deux parties complémentaires (2 et 3) déterminant entre elles un corps cylindrique, la première partie (2) et la deuxième partie (3) étant réalisées en une seule pièce moulée avec une bande (5) reliant lesdites parties pour constituer une charnière, chaque partie comportant au moins une nervure disposée dans un plan perpendiculaire à l'axe longitudinal, le bord libre de la première partie (2) opposé à celui adjacent à la charnière comportant un premier organe de verrouillage (9, 10) complémentaire d'un premier organe de verrouillage (14, 15) prévu sur le bord libre correspondant de la seconde partie (3) tandis que le bord de la première partie (2), adjacent à la charnière (5), comporte un second organe de verrouillage (11, 12) complémentaire d'un second organe de verrouillage (16, 17) prévu sur le bord de la seconde partie (3), adjacent à ladite charnière (5) caractérisée en ce que le premier organe de verrouillage de la première partie (2) prévu sur son bord libre comprend une barrette (9) terminée par un crochet (10) tourné vers l'extérieur et le second organe de verrouillage de ladite première partie est formé par une barrette (11) terminée par un crochet (12) tourné vers l'extérieur, tandis que la seconde partie (3) comporte deux ouvertures (14, 16) pratiquées dans l'épaisseur des bords correspondants et destinées à recevoir les barrettes correspondantes et dont les bords extérieurs (15, 17) sont méplats pour coopérer avec les crochets correspondants.

2. Bague de fermeture de gaines annelées, selon la revendication 1, caractérisée en ce que l'une des parties (2, 3) est pourvue sur sa surface externe d'un téton (23) pourvu de moyens (24, 25) pour sa fixation dans un trou d'une paroi.

3. Bague de fermeture de gaines annelées, selon la revendication 1, caractérisée en ce que le diamètre interne de l'une des extrémités de la bague est supérieur au diamètre interne de l'autre extrémité.

4. Bague de fermeture de gaines annelées, selon la revendication 1, caractérisée en ce que l'une des parties (2f) comporte des moyens (30, 31) pour sa fixation à un élément mâle.

5. Bague de fermeture de gaines annelées, selon la revendication 4, caractérisée en ce que l'une des parties (2f) est pourvue d'une glissière (30, 31) avec un téton d'arrêt (32) pour recevoir un élément mâle correspondant.

6. Bague de fermeture de gaines annelées, selon la revendication 1, caractérisée en ce que l'une des parties (2e) est pourvue d'une encoche (27) pour le passage de conducteurs électriques.

7. Bague de fermeture de gaines annelées, selon la revendication 6, caractérisée en ce que l'encoche (27) est pratiquée sur le bord libre de l'une des parties (2e).

## Patentansprüche

1. Verschlußring für gewellte Hüllrohre (20), der zwei komplementäre Teile (2 und 3) aufweist, die zwischen sich einen zylindrischen Körper begrenzen, wobei der erste Teil (2) und der zweite Teil (3) als ein einziges Stück mit einem Band (5) geformt sind, das die genannten Teile zur Bildung eines Scharniers verbindet, wobei jeder Teil zumindest eine Rippe aufweist, die in einer zur Längsachse senkrechten Ebene angeordnet ist, wobei der freie Rand des ersten Teils (2), der zu demjenigen entgegengesetzt ist, der an das Scharnier angrenzt, ein erstes Verriegelungsorgan (9, 10) aufweist, das zu einem ersten Verriegelungsorgan (14, 15) komplementär ist, das am entsprechenden freien Rand des zweiten Teiles (3) vorgesehen ist, und wobei der Rand des ersten Teils (2), der an das Scharnier (5) angrenzt, ein zweites Verriegelungsorgan (11, 12) aufweist, das zu einem zweiten Verriegelungsorgan (16, 17) komplementär ist, das am Rand des zweiten Teiles (3), an das genannte Scharnier (5) angrenzend, ausgebildet ist, dadurch gekennzeichnet, daß das erste Verriegelungsorgan des ersten Teiles (2), das an dessen freiem Rand vorgesehen ist, einen Bügel (9) aufweist, der in einem nach auswärts gekehrten Haken (10) endigt, und das zweite Verriegelungsorgan des genannten ersten Teiles durch einen Bügel (11) gebildet ist, der in einem nach auswärts gekehrten Haken (12) endigt, und daß der zweiten Teil (3) zwei Öffnungen (14, 16) aufweist, die in der Wandstärke der entsprechenden Ränder ausgebildet und dazu bestimmt sind, die entsprechenden Bügel aufzunehmen und deren Außenränder (15, 17) für die Zusammenwirkung mit den entsprechenden Haken abgeflacht sind.

2. Verschlußring für gewellte Hüllrohre nach Anspruch 1, dadurch gekennzeichnet, daß der eine der Teile (2, 3) an seiner Außenfläche mit einem Zapfen (23) versehen ist, der mit Mitteln (24, 25) für seine Befestigung in einem in einer Wand befindlichen Loch versehen ist.

3. Verschlußring für gewellte Hüllrohre nach Anspruch 1, dadurch gekennzeichnet, daß der Innendurchmesser des einen Endes des Verschlußringes größer ist als der Innendurchmesser des anderen Endes.

4. Verschlußring für gewellte Hüllrohre nach Anspruch 1, dadurch gekennzeichnet, daß der eine (2f) der Teile Mittel (30, 31) für seine Befestigung an einem Steckerelement aufweist.

5. Verschlußring für gewellte Hüllrohre nach Anspruch 4, dadurch gekennzeichnet, daß der eine (2f) der Teile mit einer Gleitschiene (30, 31) mit einem Arretierzapfen (32) für die Aufnahme eines entsprechenden Steckerelements versehen ist.

6. Verschlußring für gewellte Hüllrohre nach Anspruch 1, dadurch gekennzeichnet, daß der eine (2e) der Teile mit einer Aussparung (27) für den Durchtritt elektrischer Leiter versehen ist.

7. Verschlußring für gewellte Hüllrohre nach Anspruch 6, dadurch gekennzeichnet, daß die Aussparung (27) in dem freien Rand des einen (2e) der Teile ausgebildet ist.

## Claims

1. A closing ring for corrugated conduits (20) of the type comprising two complementary parts (2 and 3) determining between them a cylindrical body, the first part (2) and the second part (3) being made from a single moulded piece having a band (5) connecting said parts to form a hinge, each part comprising at least one rib disposed in a plane perpendicular to the longitudinal axis, the free edge of the first part (2) opposite to that adjacent to the hinge comprising a first locking member (9, 10) complementary to a first locking member (14, 15) provided on the corresponding free edge of the second part (3) whereas the edge of the first part (2), adjacent to the hinge (5), comprises a second locking member (11, 12) complementary to a second locking member (16, 17) provided on the edge of the second part (3), adjacent to said hinge (5),
**characterised in that** the first locking member of the first part (2) provided on its free edge comprises a small bar (9) ending in a hook (10) turned towards the outside and the second locking member of said first part is formed by a small bar (11) ending in a hook (12) turned towards the outside, whereas the second part (3) comprises two apertures (14, 16) made in the thickness of the corresponding edges and intended to receive the corresponding small bars and the outer edges (15, 17) of which are flat parts so as to cooperate with the corresponding hooks.

2. A closing ring for corrugated conduits, according to Claim 1,
**characterised in that** one of the parts (2, 3) is provided on its exterior surface with a locking stud (23) having means (24, 25) to fix it into a hole in a wall.

3. A closing ring for corrugated conduits, according to Claim 1,
**characterised in that** the internal diameter of one of the ends of the ring is greater than the internal diameter of the other end.

4. A closing ring for corrugated conduits, according to Claim 1,
**characterised in that** one of the parts (2f) comprises means (30, 31) for fixing it to a male element.

5. A closing ring for corrugated conduits, according to Claim 4,
**characterised in that** one of the parts (2f) is provided with a slide (30, 31) having a stop (32) to receive a corresponding male element.

6. A closing ring for corrugated conduits, according to Claim 1,
**characterised in that** one of the parts (2e) is provided with a slot (27) for the passage of the electric conductors.

7. A closing ring for corrugated conduits, according to Claim 6,
**characterised in that** the slot (27) is made on the free edge of one of the parts (2e).
